Europäisches Patentamt

(19) European Patent Office

Office européen des brevets

(11) Publication number: **0 015 011**
**B1**

## EUROPEAN PATENT SPECIFICATION

(45) Date of publication of patent specification: **22.06.83**

(51) Int. Cl.³: **E 02 B 15/04**

(21) Application number: **80200062.0**

(22) Date of filing: **23.01.80**

(54) **Apparatus for removing oil from the surface of a body of water.**

(30) Priority: **07.02.79 US 9986**
**23.04.79 US 32043**

(43) Date of publication of application:
**03.09.80 Bulletin 80/18**

(45) Publication of the grant of the patent:
**22.06.83 Bulletin 83/25**

(84) Designated Contracting States:
**DE FR GB NL SE**

(56) References cited:
**FR - A - 2 324 504**
**FR - A - 2 369 385**
**US - A - 3 796 656**
**US - A - 3 847 816**
**US - A - 3 983 034**
**US - A - 3 990 975**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Henning, Dean Leroy**
**Route 2 Box 207M**
**Needville Texas 77461 (US)**
Inventor: **Ward, John Michael**
**22734, Merrymount**
**Katy Texas 77450 (US)**
Inventor: **Clark III, Lewis Morgan**
**710 Langwood Drive**
**Houston Texas 77079 (US)**

(74) Representative: **Puister, Antonius Tonnis, Mr. et al,**
**P.O. Box 302**
**NL-2501 CH The Hague (NL)**

Courier Press, Leamington Spa, England

Apparatus for removing oil from the surface of a body of water

The present invention relates to an apparatus for removing oil from the surface of a body of water and more particularly relates to an oil spill clean-up kit that can convert many kinds of vessels into temporary water cleansing vessels in a relatively short time. It permits more rapid response to oil spills which occur in remote areas. Such kits are storable on drilling platforms, for example, and if a spill occurs in the vicinity, work boats may be transformed into water cleaning vessels that immediately begin cleaning up the spill.

An apparatus of the above type is described in our Netherlands patent application No. 7711932. This known apparatus comprises an oil skimmer towable alongside a vessel, which skimmer defines an at least partially flexible, elongated chamber having an open, during operation at least partially submerged front for receiving water and oil thereinto during relative movement between the chamber and the body of water. During operation the oil is collected at the top of the chamber, and subsequently discharged from the chamber via one or more suction lines.

A further example of apparatuses for removing oil from the surface of a body of water is described in US patent specification 3,796,656. This known apparatus comprises a skimmer, in the publication indicated with the expression collecting bag, which may be rolled on a drum when out of operation. When oil has to be removed from the surface of a body of water, the bag is unrolled and dragged with its open front partly immersed along the water surface, so that oil is entered into the bag. Thereafter the open front is caused to sink and the oil is collected in the upper part of the bag, from where it can be removed.

In none of the above publications particular means are described for deploying as well as launching and retrieving a skimmer of the above known type.

The object of the present invention is to provide an apparatus comprising a skimmer in combination with means allowing an easy and rapid launching, deploying and retrieving of the skimmer.

The apparatus for removing oil from the surface of a body of water thereto comprises according to the invention a skimmer (2) in the form of an at least partially flexible, elongated chamber having an open, at least partially submerged front for receiving water and oil thereinto during relative movement between the chamber and the body of water, characterized by at least one cable (61, 81, 82, 83, 85, 86, 87) for folding the chamber, said cable being slidably connected to at least one extremity of the chamber and fixedly connected to one extremity of the chamber; and at least two inclinable ramps (103) for launching and retrieving the chamber with a vessel of opportunity.

The invention will now further be described with reference to the accompanying drawing, showing by way of example preferred embodiments of the present invention.

Figure 1 is a view of a skimmer and towing vessel in operation.

Figures 2 and 3 show a comparison of the prior art with the present invention.

Figure 4 is a view of the rotatable bumper of the present invention.

Figures 5a, 5b and 5c show a foldable skimmer and in particular folding sequence for larger skimmers.

Figures 6a, 6b and 6c show a folding sequence for small foldable skimmers.

Figures 7 and 8 are plan views of alternate cable layouts.

Figures 9 and 10 are frame plan views depicting respectively, cables attached to spreader and cables attached to lift ring.

Figure 11 schematically depicts a series of steps A—F for launching and retrieving the skimmer.

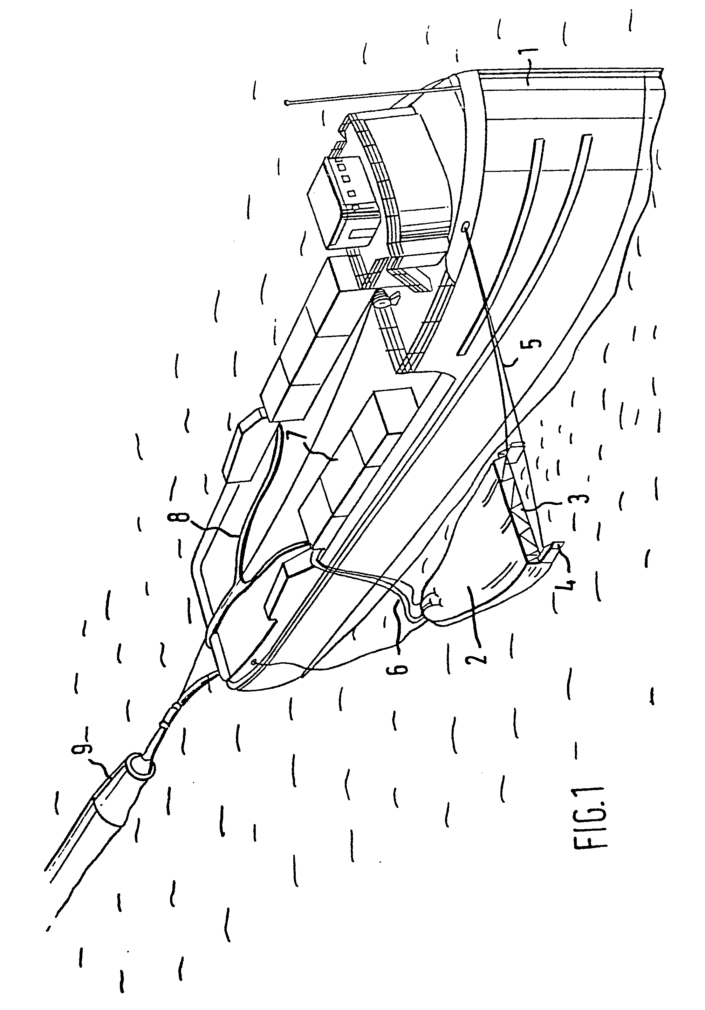

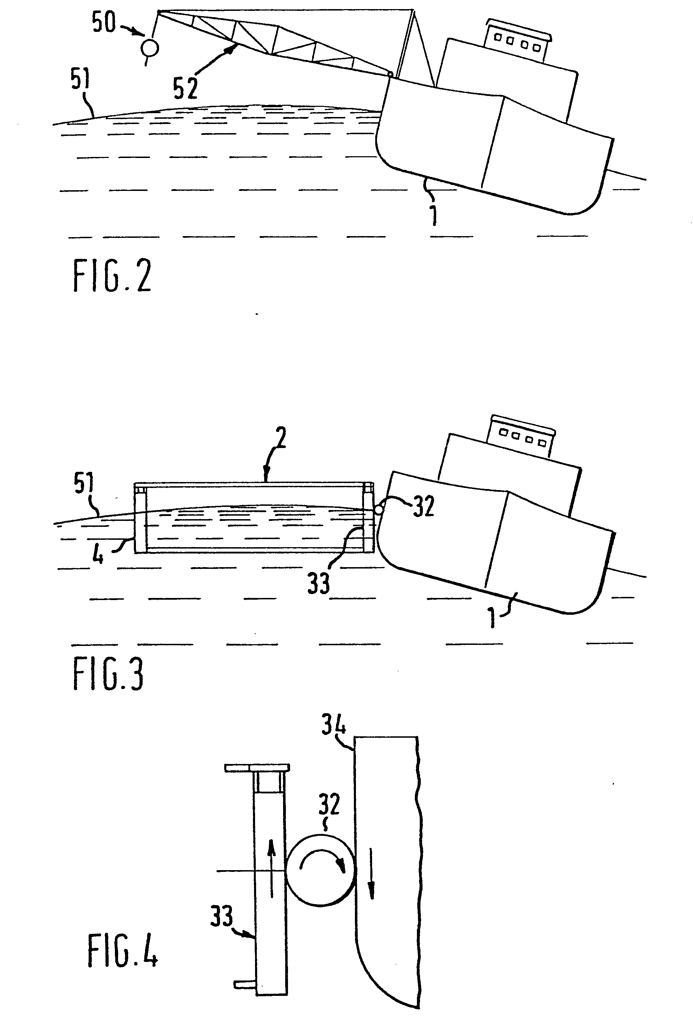

Figure 1 provides an overall view of the present invention in use with a conventional work boat 1. Skimmer 2 which has the appearance of a flattened sock with an open front end is maintained open by floating frame 3 and with floats 4. The frame is attached to the work boat by lines 5 which connect with the boat well ahead of the position alongside the boat where the skimmer is deployed. With the lines placed forward and with a special bumper the motion of the skimmer is effectively uncoupled from the motion of the boat, thereby allowing the skimmer to move freely up and down, pitch, roll, etc. In the prior art where a skimmer or boom is deployed alongside a vessel by a rigid connection, the motion of the vessel is translated into the skimmer or boom, causing it to dip beneath the water or raise above the water and in either case permitting oil to pass thereby, thus hindering effective removal of the oil from the water.

Figures 2 and 3 show how the self-floated skimmer of the present invention remains uncoupled from the roll motion of the vessel 1 while the skimmer of the prior art permits the oil boom 50 (supported by outrigger 52) to raise out of the water 51 (or sink into the water if the roll were reversed), thereby causing oil to escape. A bumper 32 is deployable between the inboard float 33 of the skimmer of the present invention and the vessel 1 to prevent damage to the vessel by the skimmer. Note how the rotatable bumper 32 acts as a hinge to uncouple the motions. Figure 3 shows how the rotatable bumper 32 permits the float 33 to raise up and maintain the desired water level even though the vessel side 34 is falling. This ability to translate (float and vessel) is important in preventing oil loss between the skimmer and the vessel. Clearly, impact damage to the skimmer or the vessel is also prevented by such a bumper.

Oil lines 6 from the rear part of the skimmer pass oil into the container 7 which is employed both as a device for separating oil and water from the skimmer, and also as a container for the skimmer and power components used to deploy the skimmer. Oil lines 8 extend from container 7 to a bag 9 towable behind the work boat 1 as a convenient means for storing separated oil, especially in the instance of larger spills which require extra storage space.

A more detailed disclosure of an embodiment of the skimmer 2 as well as the container 7 including its use for separating oil and water has been described in our Netherlands patent application No. 7711932.

While the skimmer of the present invention is preferably employed alongside a moving vessel, it is apparent that it may also be used in a stationary position in streams or currents for oil collection purposes with or without a vessel. Also, it may be deployed between hulls of a catamaran vessel. Manifestly, the present invention is useful also for collecting floating debris and floating liquid pollutants other than oil. Where possible, multiple skimmers may be deployed on one or both sides of the vessel in use. The container is useful also with other water/oil separation techniques known in the art.

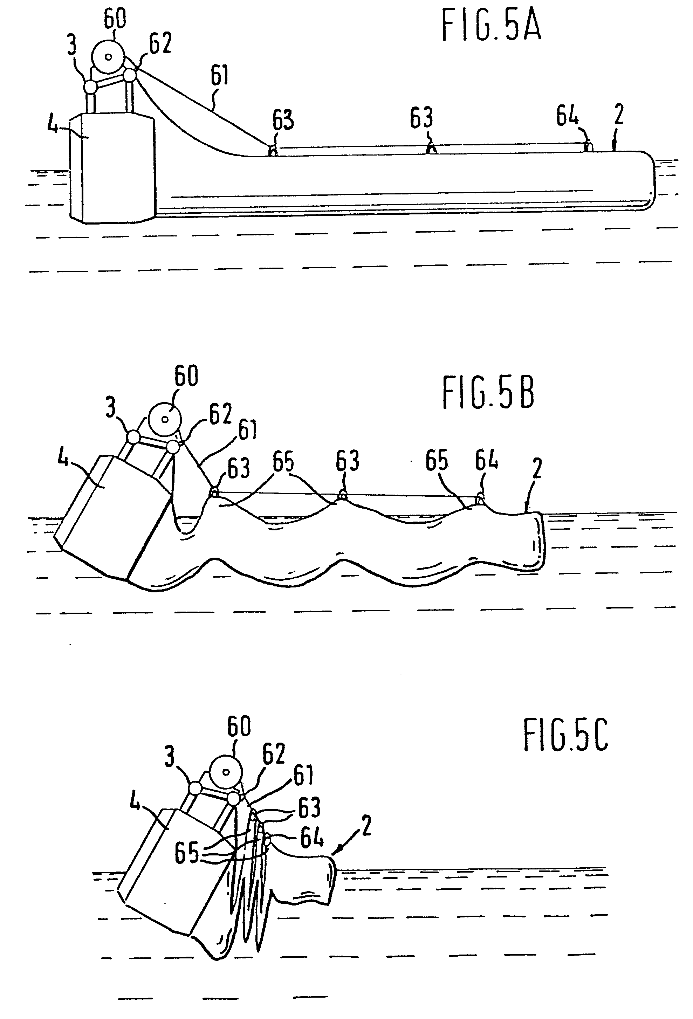

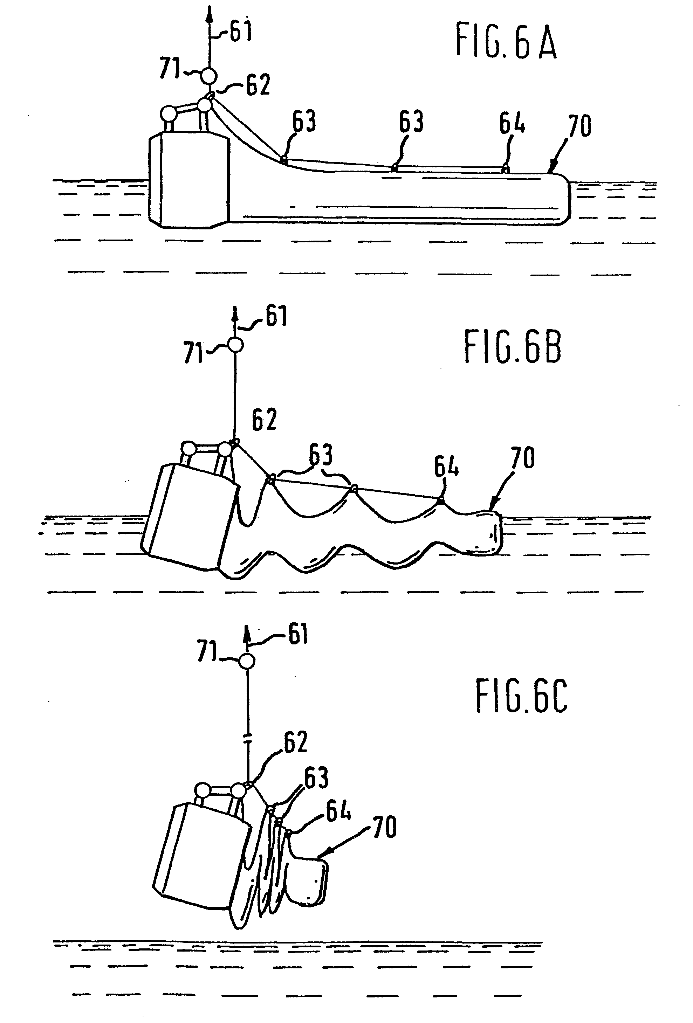

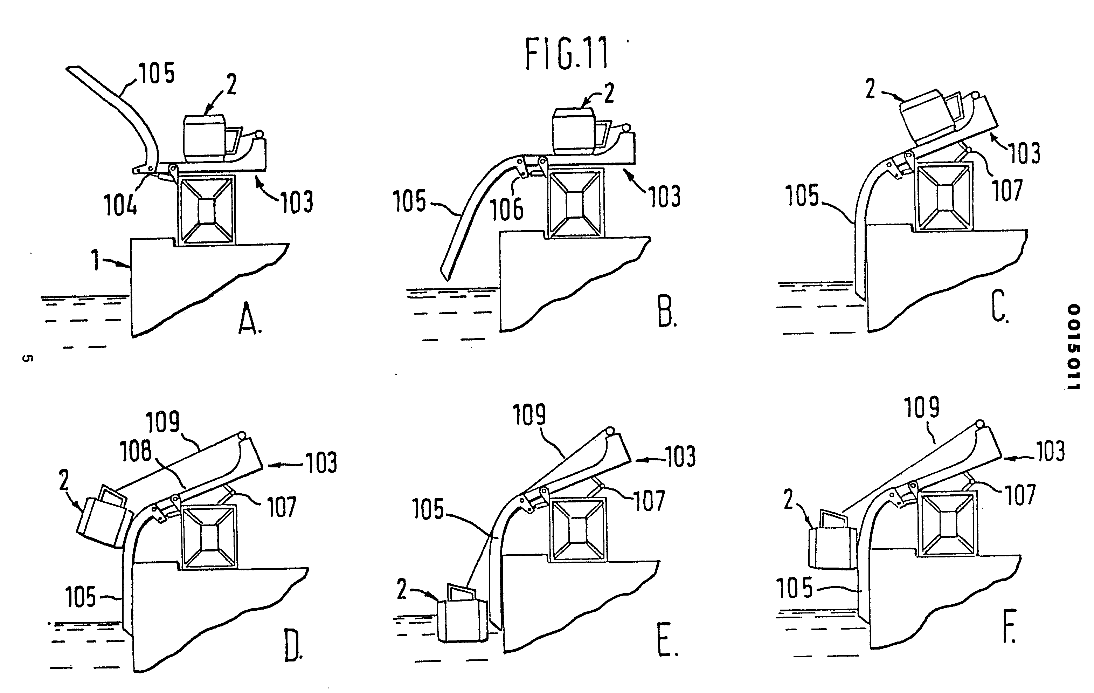

Folding of a large offshore-type foldable skimmer is shown in Figures 5a, 5b and 5c. To recover the skimmer 2 after a skimming operation, a winch 60 mounted on the framework 3 (supported by floats 4) is used to pull in fold-up cables 61 ("cable" broadly is interpreted to include lines, ropes, belts, etc.). The cables 61 run from the winch 60 through D-rings or fairleads 62 on the framework 3, through two or more D-rings 63 on the fabric of skimmer 2, and are attached to D-rings 64 near the rear of the skimmer. Drawing up on the cables 61 pulls the rear forward while the intermediate D-rings 63 hold up the tops of the desired folds 65. In effect, the skimmer folds up "accordian-style". To deploy the skimmer, tension is released on the cables 61 and a slight forward motion of the tow vessel 1 straightens out the folds 65.

Folding of a smaller skimmer 70 is shown in Figures 6a, 6b and 6c. Cable 61 is pulled by a crane or davit (not shown). From a spreader bar 71, the cable is passed through D-rings 63 and affixed to the D-ring 64 closest to the end or rear of the skimmer. Figure 6b shows the desired folds beginning to be formed with the skimmer in a partially folded disposition. Figure 6c shows the skimmer lifted clear of the water by the crane or davit.

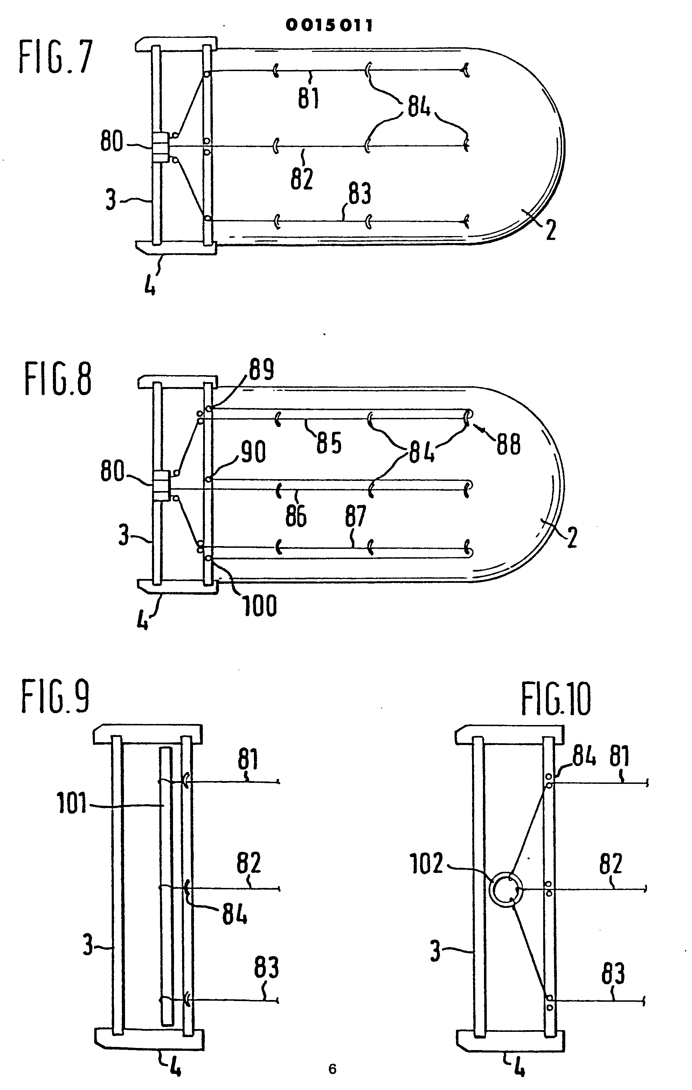

There are alternative ways of implementing this fold-up technique as shown in Figures 7—10. Cables can be located on the sides or bottom instead of the top, or the cables can be located in two or three places on the skimmer. One cable or multiple cables could be used. Grommets or fairleads or pulleys could be used in place of D-rings or triangular rings. The number of D-rings used depends on the allowable load on each and the number of folds desired. For example, three sets of rings may be used on a skimmer 12.5 meter long so that each fold is about 1.8 meter high and would not hang below framework floats of that height. A small triple-drum winch may be used to pull in the cables, or multiple single-drum winches may be used, or in smaller models the cables may be attached to a spreader bar or lift ring as shown. Lifting on the bar or ring with a crane or davit folds the fabric together and then lifts the entire assembly out of the water.

In Figure 7 a triple-drum winch 80 is used to pull cables 81, 82 and 83 through multiple D-rings 84. The drums of the winch are preferably of equal diameter. The cables are attached to the terminal D-rings. As shown in Figure 8, cables 85, 86 and 87 slide through the terminal rings 88, double back to frame 3 and are affixed thereto at points 89, 90 and 100, respectively. Figure 9 shows a spreader bar 101 which may be employed to pull cables 81, 82 and 83 through D-rings or fairleads 84. Alternatively, as shown in Figure 10, a lift ring 102 may be substituted for spreader bar 101 (element 84 is shown as fairleads in Figure 10 and as D-rings in Figure 9).

Of course, the purpose and necessity for folding the skimmer (and this applies to other similar equipment) is to reduce the size of the load to be lifted onboard a support vessel. Folding in this manner makes a neat, compact, nearly rigid load which is much easier to handle and store than the fully deployed skimmer fabric.

In Figure 11 is shown a sequence of steps A to F for launching and retrieving skimmer 2. Inclinable ramps 103 rest on top of skimmer container 7 and are each formed of two segments connected by joint 104. Upwardly extending segment 105 helps secure the skimmer in place in the at ready position, step A. The second step B for launching the skimmer is initiated by activating hydraulic piston 106 to lower segment 105 to a position such that it extends over the side of vessel 1. Next, step C, the entire ramp is inclined by means of jack 107, and the skimmer is allowed to slide towards the water off segment 108 and onto segment 105 which is now adjacent the side of the vessel. During the winching down operation of step D, the skimmer is held securely by a cable 109. In step E, the skimmer is in the water and ready to be turned 90° to assume a skimming position alongside the vessel. Recovery of the skimmer, as depicted by step F in Figure 11, involves reversing the order of the preceding steps.

## Claims

1. Apparatus for removing oil from the surface of a body of water, comprising a skimmer (2) in the form of an at least partially flexible, elongated chamber having an open, at least partially submerged front for receiving water and oil thereinto during relative movement between the chamber and the body of water, characterized by at least one cable (61, 81, 82, 83, 85, 86, 87) for folding the chamber, said cable being slidably connected to at least one extremity of the chamber and fixedly connected to one extremity of the chamber; and at least two inclinable ramps (103) for launching and retrieving the chamber with a vessel of opportunity.

2. Apparatus according to claim 1, characterized in that the cable (85, 86, 87) is fixedly connected to the front of the chamber and doubled back from a slidable connection (88) at the opposite extremity to a slidable connection at the front of the chamber.

3. Apparatus according to claim 1 or claim 2, characterized by a spreader bar (101) for applying tension to the cables at the front of the chamber.

4. Apparatus according to claim 1, characterized by a framework (3) for maintaining the front of the chamber open, wherein the cable(s) is (are) connected to the framework at the front of the chamber.

5. Apparatus according to any one of claims 1—4, characterized in that each of said inclinable ramps (103) comprises at least two segments (105, 108) united by a joint (104), wherein the chamber resides in a folded position on one segment (108) of each of the ramps and the other segment (105) of each ramp is in an elevated position.

6. Apparatus according to any one of claims 1—5, characterized by means (106) for lowering the elevated segments, and means (107) for inclining the ramps and lowering the chamber into the water alongside the vessel.

7. Apparatus according to claim 6, characterized in that the means for lowering the elevated segments is a hydraulic piston (106), and the means for inclining the ramps is a jack (107).

## Revendications

1. Appareil pour enlever l'huile de la surface d'une masse d'eau, comprenant un écrémeur (2) sous la forme d'une chambre allongée, au moins partiellement flexible, ayant un devant ouvert, au moins partiellement immergé, pour recevoir de l'eau et de l'huile durant un mouvement relatif entre la chambre et la masse d'eau, caractérisé par au moins un câble (61, 81, 82, 83, 85, 86, 87) pour replier la chambre, le câble étant relié d'une manière coulissante à au moins une extrémité de la chambre et étant relié de manière fixe à une extrémité de la chambre; et au moins deux rampes inclinables (103) pour lancer et récupérer la chambre avec un navire d'occasion.

2. Appareil selon la revendication 1, caractérisé en ce que le câble (85, 86, 87) est relié de manière fixe à l'avant de la chambre et est replié à partir d'un assemblage coulissant (88) à l'extrémité opposée jusqu'à un assemblage coulissant à l'avant de la chambre.

3. Appareil selon la revendication 1 ou la revendication 2, caractérisé par une barre d'écartement (101) pour exercer une traction sur les câbles à l'avant de la chambre.

4. Appareil selon la revendication 1, caractérisé par une charpente (3) pour maintenir ouvert l'avant de la chambre, le ou les câbles étant attachés à la charpente à l'avant de la chambre.

5. Appareil selon l'une quelconque des revendications 1 à 4, caractérisé en ce que chacune des rampes inclinables (103) comprend au moins deux segments (105, 108) reliés par une articulation (104), la chambre résidant dans une position repliée sur un segment (108) de chacune des rampes tandis que l'autre segment (105) de chaque rampe est dans une position élevée.

6. Appareil selon l'une quelconque des revendications 1 à 5, caractérisé par des moyens (106) pour abaisser les segments élevés et des moyens (107) pour incliner les rampes et faire descendre la chambre dans l'eau le long du navire.

7. Appareil selon la revendication 6, caractérisé en ce que les moyens pour abaisser les segments élevés consistent en un piston hydraulique (106) et les moyens pour incliner les rampes consistent en un vérin (107).

## Patentansprüche

1. Vorrichtung zum Abschöpfen von Öl von der Oberfläche eines Wasservolumens enthaltend einen Abschöpfer (2) in Form einer zumindest teilweise flexiblen länglichen Kammer mit einer offenen zumindest teilweise eintauchenden Vorderseite zur Aufnahme von Wasser und Öl während der Relativbewegung der Kammer zu dem Wasservolumen, gekennzeichnet durch zumindest ein Kabel (61, 81, 82, 83, 85, 86, 87) zum Zusammenlegen der Kammer, das mit zumindest einem Ende der Kammer gleitbar verbunden und mit einem Ende der Kammer fix verbunden ist, sowie zumindest zwei neigbare Gleitschienen (103) für das Ausfahren und Wiedereinholen der Kammer von bzw. auf das Schiff.

2. Vorrichtung nach Anspruch 1, dadurch gekennzeichnet, daß das Kabel (85, 86, 87) fix verbunden ist mit der Vorderseite der Kammer und rückgeführt ist durch eine gleitbare Verbindung (88) an dem entgegengesetzten Ende zu einer gleitbaren Verbindung an der Vorderseite der Kammer.

3. Vorrichtung nach Anspruch 1 oder 2, dadurch gekennzeichnet, daß eine Spannstange (101) vorgesehen ist, um an die Kabeln an der Vorderseite der Kammer Zug anzulegen.

4. Vorrichtung nach Anspruch 1, gekennzeichnet durch einen Rahmen (3) um die Vorderseite der Kammer offenzuhalten, an welchem das (die) Kabel(n) an der Vorderseite der Kammer fixiert sind.

5. Vorrichtung nach Anspruch 1 bis 4, dadurch gekennzeichnet, daß die neigbaren Gleitschienen (103) zumindest zwei Teilstücke (105, 108) verbunden über das Gelenk (104) haben, wobei die Kammer sich in zusammengelegter Position an einem Teilstück (108) jeder Gleitschiene befindet, während das andere Teilstück (105) jeder Gleitschiene sich in angehobener Position befindet.

6. Vorrichtung nach Anspruch 1 bis 5, gekennzeichnet durch ein Mittel zur Senkung des sich in angehobener Position befindlichen Teilstücks und Mittel (107) zum Neigen der Gleitschienen und Absenken der Kammer in das Wasser längsseits des Schiffs.

7. Vorrichtung nach Anspruch 6, dadurch gekennzeichnet, daß das Mittel zur Absenkung des in angehobener Position befindlichen Teilstücks ein hydraulisch betätigbarer Kolben (106) und das Mittel zum Neigen der Gleitschienen ein Hebel (107) ist.

FIG.1

FIG.2

FIG.3

FIG.4

0015011

FIG.5A

FIG.5B

FIG.5C

3

FIG.6A

61
71
62
63    63    64    70

FIG.6B

61
71
62
63        64    70

FIG.6C

71    61
62
63
64    70

4

# FIG.11

A.

B.

C.

D.

E.

F.

FIG.7

FIG.8

FIG.9

FIG.10